Europäisches Patentamt

European Patent Office

Office européen des brevets

(11) Publication number: **0 280 365 B1**

(12) **EUROPEAN PATENT SPECIFICATION**

(45) Date of publication of patent specification: **08.04.92** (51) Int. Cl.5: **F16H 7/18**, F16H 7/24

(21) Application number: **88200286.8**

(22) Date of filing: **17.02.88**

(54) Flapping-preventing runner for a pre-timed distribution assembly for internal combustion engine.

(30) Priority: **23.02.87 IT 1945587**

(43) Date of publication of application:
**31.08.88 Bulletin 88/35**

(45) Publication of the grant of the patent:
**08.04.92 Bulletin 92/15**

(84) Designated Contracting States:
**AT BE CH DE ES FR GB GR LI LU NL SE**

(56) References cited:
**BE-A- 635 659**
**FR-A- 2 414 747**
**FR-A- 2 594 514**
**GB-A- 2 092 705**

(73) Proprietor: **SOCIETA' ITALIANA CATENE CALI-BRATE REGINA S.p.A.**
**Corso Magenta 46**
**I-20123 Milan(IT)**

(72) Inventor: **Villa, Ercole**
**Via Ceppo 7**
**I-22055 Merate Como(IT)**

(74) Representative: **De Carli, Erberto et al**
**ING. BARZANO' & ZANARDO MILANO S.p.A.**
**Via Borgonuovo, 10**
**I-20121 Milano(IT)**

Rank Xerox (UK) Business Services

## Description

The present invention relates to a flapping-preventing runner for a pre-timed distribution assembly for internal combustion engines.

Distribution assemblies of internal combustion engines are substantially constituted by a pair of sprocket wheels connected to rotate in phase by a transmission chain, of single-link or multiple-link type, according to the size of the engine.

Such transmission chains, after a certain number of operation hours, become longer, and give rise to flapping phenomena.

Such phenomena are undesirable, because they are the source of noise, and of further wear.

From the prior art, a runner for tightening the transmission chain of such distribution assemblies is known, as disclosed in GB-A-2.092.705 which, summarizing, is constituted by a hub integral with a plate member defining at one of its flat sides two diverging guides destined to contain the two branches of the transmission chain of the distribution assembly. Said runner, although achieves the purposes it aims at, suffers from some drawbacks.

Said runner does not make it possible to carry out a timed pre-assemblage of the distribution assembly and hence it renders the operation of assemblage of the same distribution assembly on the engine substantially complex.

Furthermore, it is not possible to adopt said runner in a generalized fashion in distribution assemblies destined to different types of engines, as a replacement for pre-existing flapping-preventing devices, performing the same function, but of different conception, due to the lateral overall dimension of the same runner, which is considerably larger than that of the transmission chain it is associated with.

The purpose of the present invention is to provide a runner for a distribution assembly, having an extremely small lateral overall dimension, and capable of enabling a timed pre-assemblage of the distribution assembly to be carried out.

This purpose is achieved by means of a flapping-preventing runner having the features of claim 1.

The invention is illustrated for purely exemplifying, and non-limitative purposes, in the figures of the hereto attached drawing tables, wherein:

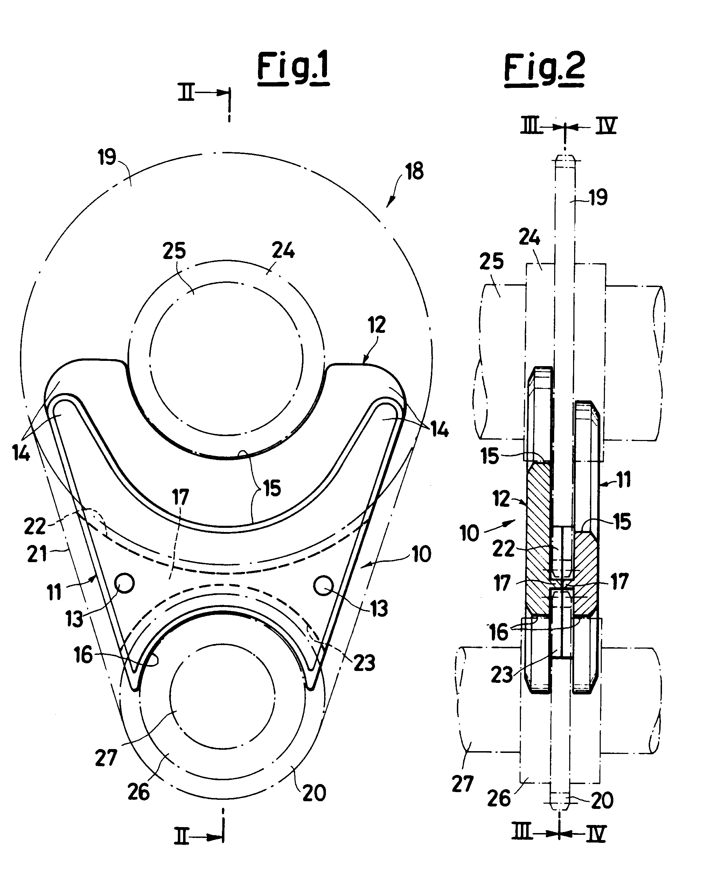

Figure 1 shows a front view of a runner of the present invention, associated with the relevant distribution assembly, this latter being shown by chain lines;

Figure 2 shows a sectional view according to path II-II of Figure 1;

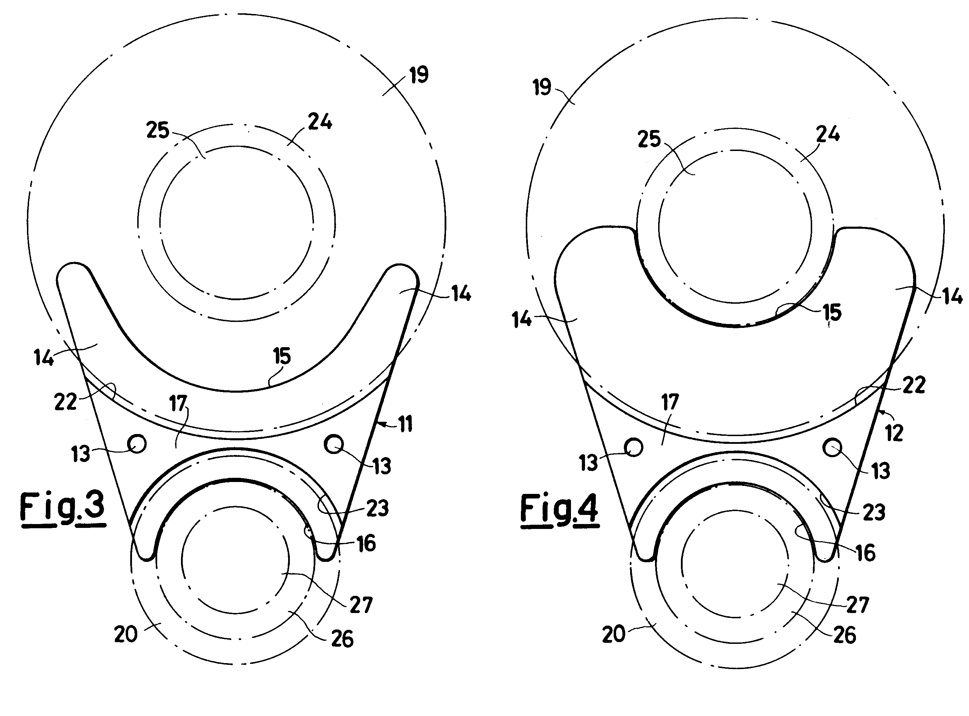

Figure 3 shows a sectional view according to path III-III of Figure 2;

Figure 4 shows a sectional view according to path IV-IV of Figure 2;

Figure 5 shows a front view of a runner accomplished according to a different form of practical embodiment of the invention;

Figure 6 shows a side view of the runner of Figure 5.

Referring to Figures from 1 to 4, the runner of the present invention, generally indicated by the reference numeral 10, is associated to a distribution assembly 18, comprising a larger sprocket wheel 19, a smaller sprocket wheel 20 and a transmission chain 21, and is constituted by a first half-runner 11 and a second half-runner 12 (showing a substantially "H"-shaped structure), which can be mutually joined side-to-side by means of traditional fastening means (not shown in the figures), engaging through-bores 13 provided in the half runners 11, 12.

Both said half-runners 11 and 12 comprise a pair of divergent side edges 14 joined by two opposite positioning and centering arcuate edges 15 and 16, respectively of larger and smaller diameter. From the inner surface of each half-runner 11 and 12, a positioning and spacing projecting portion 17 protrudes which bears the means (bores 13) for the mutual joining of the half runners 11 and 12.

The thickness of each projecting portion 17 equals half thickness of the sprocket wheels 19 and 20 of the distribution assembly the runner 10 is designed to cooperate with. The portion 17 deliver pairs of arcuate edges 22 and 23, which are substantially respectively concentrical with the edges 15 and 16, respectively.

The main difference existing between the first half-runner 11 and the second half-runner 12 is in the radius of the arcuate edge 15, which is considerably larger in the first half-runner 11. The arcuate edge 15 of the second half-runner 12 shows a substantially identical radius to that of an either stationary or movable sleeve 24 mounted on the shaft 25 of the sprocket wheel 19.

The arcuate edges 16 of the half-runners 11 and 12 constitute positioning and centering portions cooperating with a sleeve 26 mounted on the drive shaft 27 of the sprocket wheel 20, or with other, similar, means, the arcuate edges 16 showing a radius substantially identical to that of the sleeve 26.

The first half-runner 11 and the second half-runner 12 are joined together on an already timed distribution assembly 18 constituted by the pair of sprocket wheels 19 and 20 and the transmission chain 21.

In such way, the runner 10 constitutes an integral body with the distribution assembly 18 which is traded in an already timed status, and ready for an extremely simplified application to the shafts 25 and 27 of the engine. The stability and functionality of the runner 10 are secured, first of all, by the presence of the divergent side edges 14, which support and guide the transmission chain 21 up to the first points of contact the same has with the sprocket wheels 19 and 20, and, secondly, by the contacts the edge 15 of the second half-runner 12, and the edges 16 of both half-runners 11 and 12 establish with the sleeves 24 and 26 on the distribution shaft 25 and drive shaft 27.

In order to assemble the distribution assembly 18, the first step consists in positioning the sprocket wheels 19 and 20, timed relatively to each other, into engagement with the transmission chain 21.

Then, the first half-runner 11 and the second half-runner 12 of the runner 10 are placed between the sprocket wheels 19 and 20 and are joined to each other, so that the two branches of the transmission chain 21 come to lay on the side edges 14.

At the end of such assemblage operation, the distribution assembly 18 constitutes an integral body, because the side edges 14 guiding the transmission chain 21 on one side, and the arcuate edges 22 and 23 facing the sprocket wheels 19 and 20 on the other side, prevent, while respecting the necessary clearances for the assembly to correctly operate, the sprocket wheels 19 and 20 from taking a different timing to that as provided for at the time of assemblage of the whole distribution assembly.

The so-preassembled assembly makes extremely easier the operation of assemblage thereof on the engine it is destined to.

It is evident that the characteristic of showing side dimensions which are substantially within those of the elements 19, 20 and 21, make its application particularly suitable also for those engines wherein the reduction of the overall dimensions is a more and more stringent requirement.

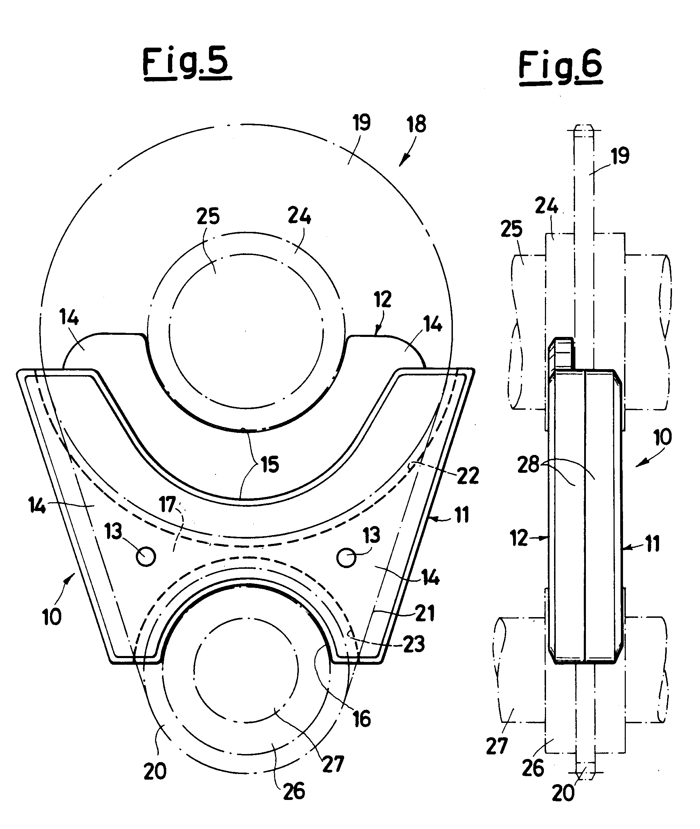

However, when such a requirement is not so stringent, providing for an alternative form of practical embodiment is possible (see Figures 5 and 6), wherein the half-runners 11 and 12 have flanges 28 surrounding the two branches of the transmission chain 21 running between the sprocket wheels 19 and 20.

## Claims

1. Flapping-preventing runner for a pre-timed distribution assembly for internal combustion engines comprising a pair of sprocket wheels (19,20) connected to rotate by a transmission chain (21),characterized in that it comprises a first and a second half-runner (11 resp. 12) positioned side-to-side to each other, each of said half-runners (11, 12) being constituted by a shaped plate having opposite divergent chain-supporting side edges (14) joined by positioning and centering arcuate edges (15,16), the arcuate edges (15,16) of one of said half runners showing a radius substantially identical to that of sleeves (24,26) mounted on shafts (26,27) and a positioning and spacing projecting portion (17) on the inner surface of at least one of said half-runners (11,12) which bears means (bores 13) for the mutual joining of the half-runners (11,12), said projecting portion (17) being provided with arcuate edges (22,23) facing the sprocket wheels (19,20).

2. Flapping-preventing runner according to claim 1, characterized in that the joined half-runners (11,12) have side dimensions substantially within the dimensions of the sprocket wheels (19,20) and the transmission chain (21).

3. Flapping-preventing runner according to claim 1, characterized in that the half-runners (11,12) have flanges (28) surrounding the branches of the transmission chain (21) running between the sprocket wheels (19,20).

## Revendications

1. Guide anti-flottement pour un ensemble de distribution préalablement calée pour moteurs à combustion interne, comprenant une paire de roues à chaîne (19, 20) accouplées en rotation par une chaîne de transmission (21), caractérisé en ce qu'il comprend un premier et un deuxième demi-guides (11 et 12 respectivement) placés côte à côte, chacun desdits demi-guides (11, 12) étant constitué par une plaque en forme qui possède des bords latéraux divergents opposés (14) donnant appui à la chaîne, qui sont réunis par des bords courbes (15, 16) de positionnement et de centrage, les bords courbes (15, 15) de l'un des demi-guides présentant un rayon sensiblement identique à celui de manchons (24, 26) montés sur les arbres (25, 27), et une partie saillante (17) de positionnement et d'espacement, prévue sur la surface interne d'au moins un desdits demi-guides (11, 12) qui porte des moyens (perçages 13) prévus pour assembler les demi-guides (11, 12) l'un à l'autre, ladite partie saillante (17) étant munie de bords courbes (22, 23) qui font face aux roues à chaîne (19, 20).

2. Guide anti-flottement selon la revendication 1, caractérisé en ce que les demi-guides (11, 12) assemblés possèdent des dimensions latérales sensiblement contenues dans les limites des dimensions des roues à chaîne (19, 20) et de la chaîne de transmission (21).

3.  Guide anti-flottement selon la revendication 1, caractérisé en ce que les demi-guides (11, 12) présentent des joues (28) qui recouvrent les brins de la chaîne de transmission (21) qui circulent entre les roues à chaîne (19, 20).

**Patentansprüche**

1.  Klapperschutzführung für eine voreingestellte Verteilereinheit von Verbrennungskraftmaschinen mit einem Paar von Zahnrädern (19,20, welche über eine Übertragungskette (21) rotierbar miteinander verbunden sind, dadurch gekennzeichnet, daß sie eine erste und eine Zweite Halbführung (11 bzw. 12) umfaßt, welche nebeneinander angeordnet sind, wobei jede Halbführung (11,12) von einer geformten Platte gebildet ist, welche gegenüberliegende, divergierende und die Kette abstützende Seitenkanten (14) aufweist, an welche gekrümmte Positionier- und Zentrierkanten (15,16) anschließen, wobei die gekrümmten Kanten (15,16) einer der Halbführungen einen Radius aufweisen, welcher im wesentlichen gleich dem Radius von an Wellen (25,27) angeordneten Buchsen (24,26) ist, wobei ein vorragender Bereich (17) zum Positionieren und Abstandhalten an der Innenfläche wenigstens einer Halbführung (11,12) vorgesehen ist, welche Mittel (Bohrungen 13) für die gegenseitige Verbindung der Halbführungen (11,12) trägt, wobei der vorragende Bereich(17) mit zu den Zahnrädern (19,20) gewandten gekrümmten Kanten (22,23) ausgebildet ist.

2.  Klapperschutzführung nach Anspruch 1, dadurch gekennzeichnet, daß die verbundenen Halbführungen (11,12) Seitenabmessungen aufweisen, welche im wesentlichen innerhalb der Abmessungen der Zahnräder (19,20) und der Übertragungskette (21) liegen.

3.  Klapperschutzführung nach Anspruch 1, dadurch gekennzeichnet, daß die Halbführungen (11,12) Flansche (28) aufweisen, welche die zwischen den Zahnrädern (19,20) laufenden Teile der Übertragungskette (21) umgeben.

# Fig.1

# Fig.2

**Fig.3**

**Fig.4**

## Fig.5

## Fig.6